# EUROPÄISCHE PATENTSCHRIFT

(11) **EP 1 123 498 B1**
(45) Veröffentlichungstag und Bekanntmachung des Hinweises auf die Patenterteilung: **21.03.2007**
(21) Anmeldenummer: 98956858.9
(22) Anmeldetag: 21.10.1998
(51) Int. Cl.: G01N 15/02

(54) **AUSWERTEVERFAHREN FÜR EINEN PARTIKELZÄHLER UND VORRICHTUNG ZUM DURCHFÜHREN DES VERFAHRENS**
EVALUATION METHOD FOR A PARTICLE COUNTER AND DEVICE FOR CARRYING OUT SAID METHOD
PROCEDE D'EVALUATION DESTINE A UN COMPTEUR DE PARTICULES ET DISPOSITIF PERMETTANT D'EXECUTER CE PROCEDE

(43) Veröffentlichungstag der Anmeldung: 16.08.2001
(73) Patentinhaber: HYDAC FILTERTECHNIK GMBH, 66280 Sulzbach/Saar (DE)
(72) Erfinder: SAHNER, Paul, D-66763 Dillingen (DE)
(74) Vertreter: Crazzolara, Helmut
(86) Internationale Anmeldenummer: PCT/EP1998/006670
(87) Internationale Veröffentlichungsnummer: WO 2000/023787

(56) Entgegenhaltungen:
- DE-B- 1 294 051
- GB-A- 2 082 764
- US-A- 4 491 926

## Beschreibung

Die Erfindung betrifft ein Auswerteverfahren für einen Partikelzähler, bei dem mittels eines Sensors, der auf die Anwesenheit von Partikeln in einer von einem Fluidstrom durchströmten Meßzone anspricht, ein Sensorsignal erzeugt wird, das Sensorsignal mittels einer Signalverarbeitungeinrichtung aufbereitet und unter Berücksichtigung zumindest eines Kalibrierfaktors in einen die Partikelbelastung des Fluidstromes bezeichnenden Anzeigewert überführt wird. Außerdem betrifft die Erfindung eine Vorrichtung zum Durchführen des Auswerteverfahrens.

Aus der europäischen Patentschrift 0 427 908 ist ein Partikelzähler bekannt, der nach dem Abdunkelungsverfahren arbeitet und eine Lichtschranke aufweist, deren Empfänger bei Anwesenheit von opaken Partikeln in der Meßzone Sensorsignale erzeugt. Durch Auswerten dieser Sensorsignale, indem in der in der DE 41 10 231 A1 aufgezeigten Weise ein Auswerteverfahren der eingangs genannten Art durchgeführt wird, soll der Verschmutzungsgrad des die Meßzone durchströmenden Fluidstromes, bei dem es sich vorzugsweise um Hydraulik-Mineralöl handelt, überwacht werden, genauer gesagt, die Belastung des betreffenden Fluides durch Feststoffe wie metallische und nichtmetallische Verunreinigungen festgestellt werden oder das Vorliegen von Luftblasen oder Wassertropfen, die in der Lichtschranke ebenfalls zu Abdunkelungserscheinungen führen, die im Sensorsignal in Erscheinung treten.

Bei dem herkömmlichen Auswerteverfahren werden Partikel, die in einem bestimmten Meßvolumen vorhanden sind, in verschiedenen, unterschiedlichen Partikelgrößenklassen zugeordneten Größenkanälen jeweils als Impuls des Sensorsignales gezählt. Das Meßvolumen wird durch Volumenstrommessung ermittelt. Durch Multiplikation mit den jeweiligen Größenkanälen entsprechenden, individuellen Kalibrierfaktoren wird die jeweils gezählte Partikelzahl korrigiert. Diese korrigierten Partikelzahlen werden dann entsprechend den NAS 1638- oder ISO 4406-Tabellen in Verschmutzungsklassen umgerechnet.

Die DE 1 294 051 B zeigt ein Verfahren und eine Vorrichtung zum Messen des Volumens bzw. des Gewichts einer Menge von im wesentlichen unregelmäßig durch einen Kanal bestimmten Querschnitts geförderten Körpern. Dabei wird das Sensorsignal mittels einer Triggerstufe in Impulse konstanter Amplitude umgewandelt. Diese werden einem Integrator zugeführt, in dem eine Zeitintegration der diskreten Einzelimpulse erfolgt. Nach jedem Impuls wird das Ausgangssignal des Integrators zurückgesetzt. Das Verfahren liefert ein Ausgangssignal, das einen Mittelwert des Volumens bzw. des Gewichts der in einem zu betrachtenden Zeitraum transportierten Körper repräsentiert.

Die GB 2 082 764 A zeigt eine Vorrichtung zum Messen von Partikeln in Fluiden, bei der das Auftreten von Partikeln als Ereignis ermittelt wird und die Ereignisse mittels eines Zählers aufsummiert werden. Bei Überschreiten einer vorgebbaren Anzahl von Ereignissen wird ein Schalter aktiviert, der beispielsweise einen Alarm auslöst. Zur Bestimmung der Partikeldichte muß zusätzlich und unabhängig der Volumenstrom gemessen werden.

Der Erfindung liegt die Aufgabe zugrunde, ein Auswerteverfahren zu schaffen, das sich gegenüber dem herkömmlichen Verfahren dadurch auszeichnet, daß die Partikelbelastung des betreffenden Fluidstromes mit geringerem Aufwand und mit höherer Genauigkeit ermittelbar ist.

Bei einem Auswerteverfahren der eingangs genannten Art ist diese Aufgabe erfindungsgemäß dadurch gelöst, daß die Aufbereitung des Sensorsignals so durchgeführt wird, daß innerhalb eines vorgegebenen Zeitraumes die individuellen Verweilzeiten der Partikel in der Meßzone ermittelt werden, und daß durch Summation der Verweilzeiten ein Summensignal gebildet und dieses unter Berücksichtigung des zumindest einen Kalibrierfaktors zur Darstellung des Anzeigewertes benutzt wird.

Dadurch, daß erfindungsgemäß der Anzeigewert nicht mehr aufgrund der gezählten Anzahl von in einem bestimmten Fluidvolumen vorhandenen Partikeln ermittelt wird, sondern aufgrund einer innerhalb eines festen Zeitraumes durchgeführten Summation der individuellen Verweilzeiten der Partikel innerhalb der Meßzone, kann auf die beim herkömmlichen Verfahren erforderliche Volumenstrommessung sowie auf weitere, damit in Zusammenhang stehende Maßnahmen, die beim herkömmlichen Verfahren erforderlich sind, verzichtet werden. Dadurch zeichnet sich das erfindungsgemäße Verfahren nicht nur durch vereinfachte Durchführbarkeit mit verringertem apparativem Aufwand aus, sondern auch durch eine vergleichsweise höhere Genauigkeit, weil die Auswertung, da keine Kenntnis über den vorhandenen Volumenstrom notwendig ist, von jeglicher Messung oder Schwankung des Volumenstromes sowie von jeglicher Konditionierung unabhängig ist. Zur höheren Genauigkeit trägt zudem der Umstand bei, daß kein Fehler einer Volumenstrommessung mit in die Berechnungen eingeht.

Es ist zwar bei einem Verfahren zur Bestimmung der Verteilung der Teilchengrößen von in Fluiden dispergierten Teilchen aus der DE 32 09 510 C2 (= US 4,491,926) bereits bekannt, Verweilzeiten von Teilchen in der Meßzone zu ermitteln. Im Unterschied zum erfindungsgemäßen Verfahren wird die Aufbereitung des Sensorsignals so durchgeführt, daß Verweilzeiten der Teilchen in der Meßzone aufgrund der Anzahl von Zählimpulsen ermittelt werden.

Wie bei herkömmlichen Auswerteverfahren kann bei der Erfindung die Auswertung auf verschiedene Partikelgrößenklassen, sogenannte Größenkanäle, bezogen werden, wobei für jeden betreffenden Größenkanal ein entsprechender Kalibrierfaktor für die Ermittlung des Anzeigewertes benutzt wird. Dadurch läßt sich aus dem Summensignal die Partikelanzahl pro Fluidvolumen, beispielsweise pro 100ml, ableiten, so daß dann wiederum anhand dieser Partikelzahlen die Zuordnung zu Verschmutzungsklassen entsprechend den sich hierauf beziehenden NAS 1638- oder ISO 4406-Tabellen vorgenommen werden kann.

Für die Impulshöhenauswertung des Sensorsignales für die Zuordnung zu den Größenkanälen kann das Sensorsignal mittels einer Komparatorschaltung in ein die Verweilzeiten unter Berücksichtigung eines vorgegebenen Schwellenwertes darstellendes Komparatorausgangssignal überführt werden, welches für die Summation der Verweilzeiten benutzt wird. Letztere kann analog oder digital erfolgen. Bei der analogen Bestimmung wird das Komparatorausgangssignal innerhalb des vorgegebenen Zeitraumes zu einem ein Summensignal darstellenden Spannungswert aufintegriert. Bei der digitalen Bestimmung gemäß einem bevorzugten Ausführungsbeispiel wird so vorgegangen, daß die Summation der Verweilzeiten in der Weise durchgeführt wird, daß Oszillatorimpulse gezählt werden, die innerhalb des vorgegebenen Zeitraums nach Maßgabe des Komparatorausgangssignales freigegeben werden.

Gemäß einem weiteren Aspekt der Erfindung liegt dieser auch die Aufgabe zugrunde, eine Vorrichtung zum Durchführen des aufgezeigten Auswerteverfahrens zu schaffen. Gemäß Patentanspruch 6 weist die erfindungsgemäße Vorrichtung eine Signalverarbeitungseinrichtung mit einer Komparatorschaltung zur Generierung eines die Verweilzeiten der Partikel in der Meßzone unter Berücksichtigung eines vorgegebenen Schwellenwertes darstellenden Komparatorausgangssignales, mit einem Taktgeber für die Erzeugung eines den vorgegebenen Zeitraum definierenden Taktsignales sowie mit einer Summiereinrichtung auf.

Nachstehend ist die Erfindung anhand der Zeichnungen im einzelnen erläutert. Es zeigen:
- Fig. 1: eine schematisch vereinfacht, teils aufgeschnitten und mit abgenommenem Gerätedeckel dargestellte Draufsicht einer Geräteeinheit aus Partikelzähler und zugehöriger Auswerteeinrichtung;
- Fig. 2: eine stark schematisch vereinfachte Blockdarstellung eines Ausführungsbeispiels der Signalverarbeitungseinrichtung zur Verwendung bei der Geräteeinheit von Fig. 1;
- Fig. 3 und 4: Diagramme des zeitlichen Verlaufs von Signalimpulsen der Signalverarbeitungseinrichtung von Fig. 2;
- Fig. 5: eine der Fig. 2 entsprechende Darstellung einer abgewandelten Form der Signalverarbeitungseinrichtung und
- Fig. 6 und 7: den Fig. 3 und 4 entsprechende Diagramme des zeitlichen Verlaufs von Signalimpulsen der Signalverarbeitungseinrichtung von Fig. 5.

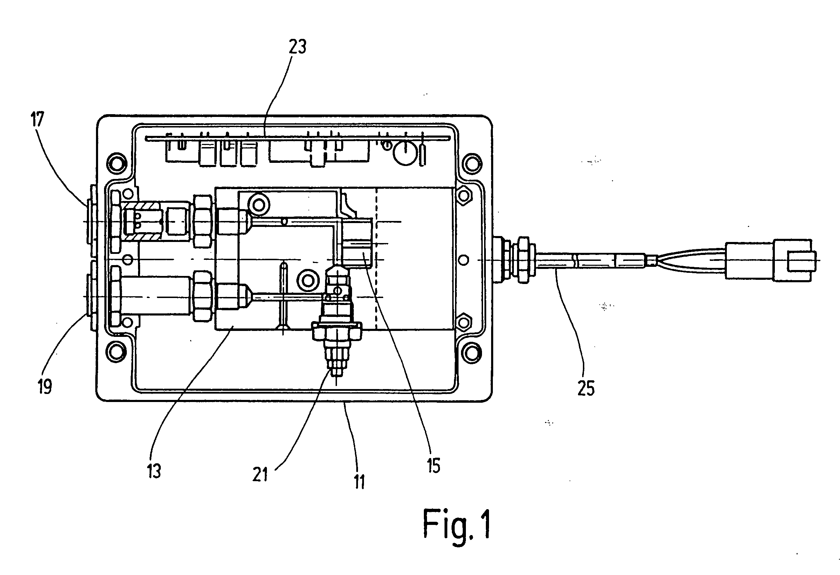

Eine in Fig. 1 gezeigte Geräteeinheit weist ein mit abgenommenem Deckel dargestelltes Gehäuse 11 aus Aluminium auf, in dem ein Sensorblock 13 mit einem Partikelsensor 15 angeordnet ist. Bei letzterem handelt es sich um einen bekannten Sensor gemäß der europäischen Patentschrift 0 427 908, der nach dem Abdunkelungsprinzip mittels einer Lichtschrankenanordnung Sensorsignale erzeugt, die die Anwesenheit von Partikeln in einer Meßzone darstellen. Für die Zufuhr und die Abfuhr des die Meßzone durchströmenden Fluides weist das Gehäuse 11 einen Fluideinlaß 17 bzw. Fluidauslaß 19 auf. Um den Anschluß an eine druckbelastete Leitung zu ermöglichen, ist der Sensorblock 13 außerdem mit einem Druckbegrenzungsventil 21 versehen.

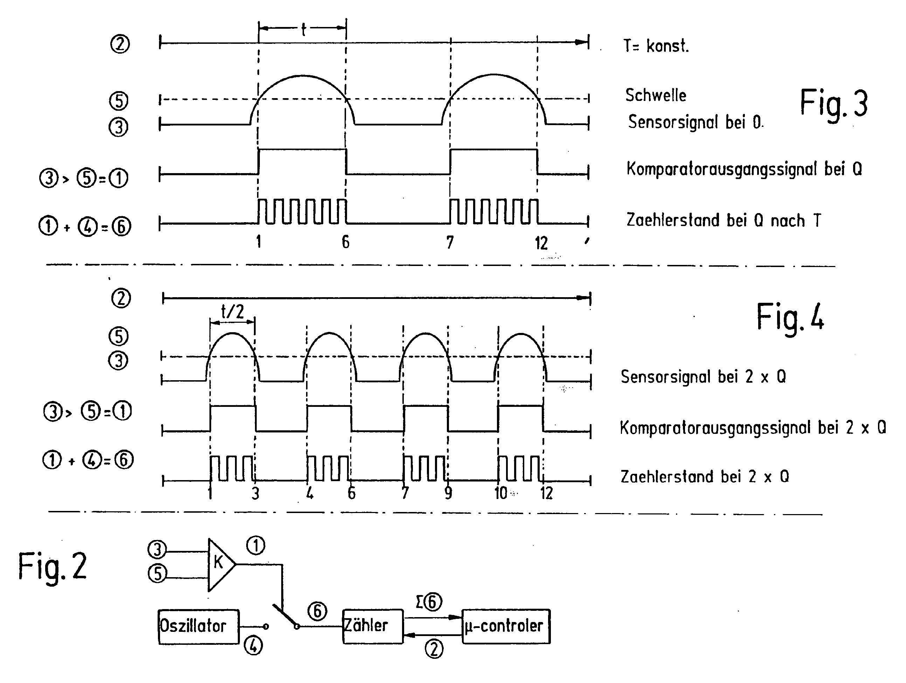

Eine als Auswerteschaltung für die Sensorsignale des Partikelsensors 15 dienende Signalverarbeitungseinrichtung, die ebenfalls im Gehäuse 11 untergebracht ist, ist in Fig. 1 mit 23 bezeichnet. Die Energieversorgung für den Partikelsensor 15 und die Signalverarbeitungseinrichtung 23 erfolgt über ein Kabel 25, über das auch das Ausgangssignal abgegeben wird, das eine NAS-Verschmutzungsklasse kennzeichnet und beispielsweise als pulsdauermoduliertes Rechtecksignal ausgegeben wird. Ein Beispiel eines digitalen Auswerteverfahrens für die Erzeugung dieses Ausgangssignales ist in den Fig. 2 bis 4 näher erläutert.

In diesen Figuren sind mit ② ein vom Taktgeber eines Kontrollers zugeführtes, einen vorgegebenen Zeitraum definierendes Zeitsignal, mit ③ das Sensorsignal des Partikelsensors 15, mit ⑤ ein Schwellenwertsignal, mit ① ein durch Komparation aus ③ und ⑤ erzeugtes Komparatorausgangssignal und mit ⑥ Zählsignalimpulse symbolisiert, die bei durch das Komparatorausgangssignal ① freigegebenen Oszillatorimpulsen ④ in Erscheinung treten. Fig. 3 verdeutlicht ein Beispiel, bei dem bei einem gegebenen Durchfluß Q des Fluides während des vorgegebenen Zeitraumes T = konst. (beispielsweise eine Minute) das Sensorsignal ③ die Anwesenheit zweier Partikel signalisiert, die bei dem gewählten Schwellenwert ⑤ als Ausgangssignal einer in Fig. 2 mit K bezeichneten Komparatorschaltung zu einem Komparatorausgangssignal ① führen, das für jeden Partikel eine Verweilzeit von t kennzeichnet.

Bei der vorliegend gewählten Oszillatorfrequenz ④ führt deren Freigabe durch das Komparatorausgangssignal über jede der Verweilzeiten t zu je sechs Zählimpulsen, die am Ende des Zeitraumes T zu einem aufsummierten Zählerstand von 12 führen, siehe Fig. 3.

Fig. 4 zeigt die Verhältnisse bei dem gleichen, also die gleiche Partikelbelastung aufweisenden, Fluid wie in Fig. 2, wobei jedoch der Durchfluß des Fluids 2 x Q ist, also doppelt so hoch ist wie bei Fig. 3. Dieser verdoppelte Durchfluß führt bei der gleichen Partikelbelastung zum Auftreten eines Sensorsignales ③ das vier vom Sensor erfaßte Partikel signalisiert, wobei jedoch die individuelle Verweilzeit aufgrund des verdoppelten Durchflusses lediglich t/2 ist. Bei gleicher Oszillatorfrequenz erscheinen bei jeder individuellen Verweilzeit t/2 jeweils drei Zählimpulse ⑥ die innerhalb des Zeitraumes T mit vier aufsummierten Verweilzeiten t/2 wiederum zum gleichen Zählerstand 12 beim Durchfluß 2 x Q führen. Der Zählerstand nach Ablauf des Zeitraumes T ist also unabhängig vom Durchfluß jeweils der gleiche. Durch übliche Umrechnung mit entsprechenden Kalibrierfaktoren ist daher aus dem Zählerstand die Partikelbelastung oder der Verschmutzungsgrad nach NAS oder ISO ableitbar.

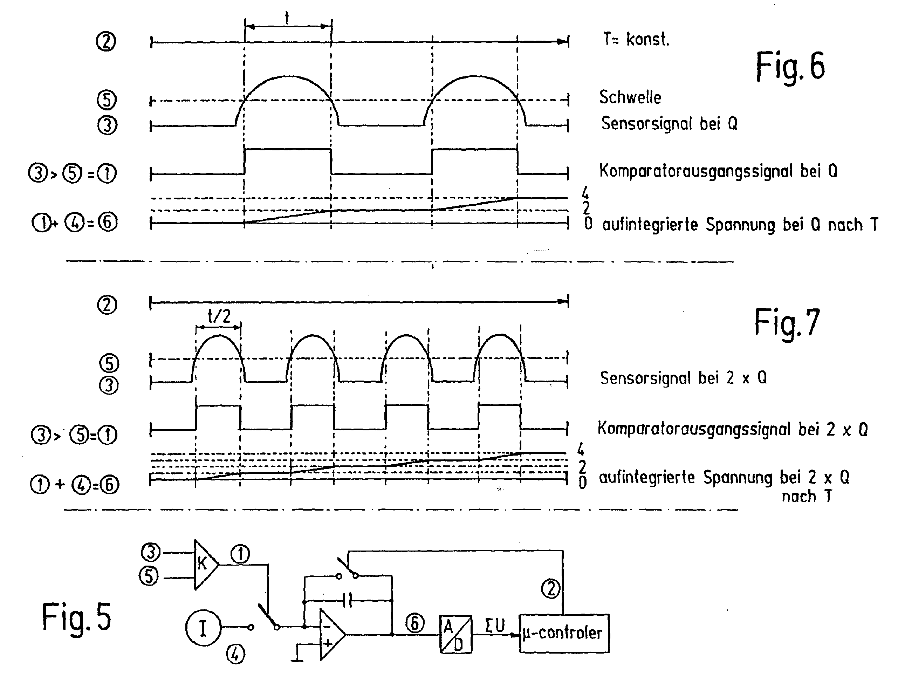

Fig. 5 bis 7 zeigen eine mögliche Anordnung für analoge Auswertung, wobei in der Blockdarstellung von Fig. 5 eine Stromquelle mit I bezeichnet ist. In den Fig. 6 und 7 sind, in Entsprechung zu den Fig. 3 und 4, wiederum die Verhältnisse bei Durchfluß Q bzw. Durchfluß 2 x Q dargestellt sind. Wie zuvor signalisiert bei dem Durchfluß 2 x Q das Komparatorausgangssignal ① bei gegebener Schwelle ⑤ eine gegenüber Fig. 6 doppelte Anzahl von Verweilzeiten, wobei die individuellen Verweilzeiten gegenüber t von Fig. 6 auf t/2 bei Fig. 7 verringert sind. Die mittels eines Integrators in der Schaltung von Fig. 5 nach Maßgabe des Komparatorausgangssignales ① aufintegrierte Spannung steigt bei dem Beispiel von Fig. 6 während jeder der individuellen Verweilzeiten t um zwei Spannungseinheiten an, so daß die aufintegrierte Spannung beim Durchfluß Q nach dem Zeitraum T vier Spannungseinheiten beträgt.

Beim Beispiel von Fig. 7 ändert sich aufgrund der halbierten Verweilzeit t/2 die Spannung ⑥ jeweils nur um eine Spannungseinheit, was nach Ablauf des Zeitraumes T bei dem verdoppelten Durchfluß 2 x Q ebenfalls zum aufintegrierten Wert von vier Spannungseinheiten führt. Das Auswertungsergebnis ist ebenfalls wieder unabhängig vom Durchfluß.

## Patentansprüche

1. Auswerteverfahren für einen Partikelzähler, bei dem mittels eines Sensors, der auf die Anwesenheit von Partikeln in einer von einem Fluidstrom durchströmten Meßzone anspricht, ein Sensorsignal erzeugt wird, das Sensorsignal mittels einer Signalverarbeitungseinrichtung aufbereitet und unter Berücksichtigung zumindest eines Kalibrierfaktors in einen die Partikelbelastung des Fluidstromes bezeichnenden Anzeigewert überführt wird, **dadurch gekennzeichnet, daß** die Aufbereitung des Sensorsignals so durchgeführt wird, daß innerhalb eines vorgegebenen Zeitraumes die individuellen Verweilzeiten der Partikel in der Meßzone ermittelt werden, und daß durch Summation der Verweilzeiten ein Summensignal gebildet und dieses unter Berücksichtigung des zumindest einen Kalibrierfaktors zur Darstellung des Anzeigewertes benutzt wird.

2. Auswerteverfahren nach Anspruch 1, **dadurch gekennzeichnet, daß** das Sensorsignal mittels einer Komparatorschaltung in ein die Verweilzeiten unter Berücksichtigung eines vorgegebenen Schwellenwertes darstellendes Komparatorausgangssignal überführt wird und daß dieses für die Summation der Verweilzeiten benutzt wird.

3. Auswerteverfahren nach Anspruch 2, **dadurch gekennzeichnet, daß** die Summation der Verweilzeiten in der Weise durchgeführt wird, daß Oszillatorimpulse gezählt werden, die innerhalb des vorgegebenen Zeitraums nach Maßnahme des Komparatorausgangssignales freigegeben werden.

4. Auswerteverfahren nach Anspruch 2, **dadurch gekennzeichnet, daß** bei der Summation der Verweilzeiten so vorgegangen wird, daß durch Integration des Komparatorausgangssignales innerhalb des vorgegebenen Zeitraumes erzeugte Signalwerte aufsummiert werden.

5. Auswerteverfahren nach Anspruch 4, **dadurch gekennzeichnet, daß** die aufsummierten Signalwerte mittels eines Analog-Digital-Wandlers digitalisiert werden.

6. Vorrichtung zum Durchführen des Auswerteverfahrens nach einem der Ansprüche 1 bis 5, mit einer Signalverarbeitungseinrichtung (23), die eine Komparatorschaltung (K) zur Generierung eines die Verweilzeiten der Partikel in der Meßzone unter Berücksichtigung eines vorgegebenen Schwellenwertes ⑤ darstellenden Komparatorausgangssignales ① einen Taktgeber für die Erzeugung eines den vorgegebenen Zeitraum (T) definierenden Taktsignales ② sowie eine Summiereinrichtung aufweist.

7. Vorrichtung nach Anspruch 6, **dadurch gekennzeichnet, daß** die Signalverarbeitungseinrichtung (23) einen Oszillator aufweist, dessen Impulse ④ nach Maßgabe des Komparatorausgangssignales ① freigebbar sind, und daß ein die freigegebenen Oszillatorimpulse ④ innerhalb des vorgegebenen Zeitraumes (T) zählender Zähler vorhanden ist.

## Claims

1. Evaluation method for a particle counter, whereby the same generates a sensor signal by means of a sensor that responds to the presence of particles in a measuring zone flowed through by a fluid stream, and whereby the said sensor signal is processed by means of a signal processing unit and converted into a display value representing the particle load of the fluid stream while taking into consideration at least one calibration factor, **characterised in that** the processing of the sensor signal is carried out in such a way that the individual residence times of the particles are detected within the measuring zone during a pre-determined time period, and **in that** a sum of the signal is formed by adding up the residence times, and **in that** the same is used to generate the display value while taking into account at least one calibration factor.

2. Evaluation method according to Claim 1, **characterised in that** the sensor signal is transformed by a comparator circuit into a comparator output signal representing the residence times while taking into account a pre-determined threshold value.

3. Evaluation method according to Claim 2, **characterised in that** the adding up of the residence times is carried out in such a way that oscillator pulses released within the pre-determined time period according to the comparator output signal are counted.

4. Evaluation method according to Claim 2, **characterised in that** the adding up of the residence times is carried out in such a way that signal values generated within the pre-determined time period are added up by integration of the comparator output signal.

5. Evaluation method according to Claim 4, **characterised in that** the added up signal values are digitalised by means of an analogue/digital converter.

6. Device for carrying out the evaluation method according to one of the Claims 1 to 5, with a signal processing unit (23), the same comprising a comparator circuit (K) for generating a comparator output signal [1] representing the residence times of the particles in the measuring zone while taking into account a pre-determined threshold value [5], a cycle generator for generating a cycle signal [2] defining the pre-determined time period (T), and an adding up means.

7. Device according to Claim 6, **characterised in that** the signal processing unit (23) comprises an oscillator, the pulses [4] of which are released according to the comparator output signal [1], and **in that** a counter counting the oscillator pulses [4] released within the pre-determined time period (T) is provided.

## Revendications

1. Procédé d'exploitation pour un compteur de particules, d'après lequel un signal de capteur est produit à l'aide d'un capteur qui réagit à la présence de particules dans une zone de mesure parcourue par un courant de fluide, le signal de capteur est traité à l'aide d'un dispositif de traitement des signaux et il est transformé en une valeur d'affichage qui indique la teneur en particules du courant de fluide en tenant compte d'au moins un facteur d'étalonnage,
**caractérisé en ce que** l'on effectue le traitement du signal de capteur de telle manière que, dans un laps de temps prédéfini, on établit les temps de séjour de chaque particule dans la zone de mesure et **en ce que** l'on forme un signal de somme en additionnant les temps de séjour et on utilise en tenant compte de l'au moins un facteur d'étalonnage le signal de somme pour représenter la valeur d'affichage.

2. Procédé d'exploitation selon la revendication 1, **caractérisé en ce que** l'on transforme le signal de capteur à l'aide d'un circuit de comparaison en un signal de sortie de comparateur, qui représente les temps de séjour en tenant compte d'une valeur seuil prédéfinie et **en ce qu'**on l'utilise pour additionner les temps de séjour.

3. Procédé d'exploitation selon la revendication 2, **caractérisé en ce que** l'on additionne les temps de séjour en comptant les impulsions d'oscillation qui sont libérées dans le laps de temps prédéfini en fonction du signal de sortie de comparateur.

4. Procédé d'exploitation selon la revendication 2, **caractérisé en ce que** pour additionner les temps de séjour, on procède de telle manière que des valeurs de signal produites pendant le laps de temps prédéfini sont additionnées en intégrant le signal de sortie du comparateur.

5. Procédé d'exploitation selon la revendication 4, **caractérisé en ce que** les valeurs de signal additionnées sont numérisées à l'aide d'un convertisseur analogique-numérique.

6. Dispositif pour exécuter le procédé d'exploitation d'après l'une des revendications 1 à 5, comportant un dispositif de traitement des signaux (23) équipé d'un circuit de comparaison (K) pour produire un signal de sortie de comparateur (1) qui représente les temps de séjour des particules dans la zone de mesure en tenant compte d'une valeur seuil prédéfinie, un générateur de rythme pour produire un signal de rythme (2) qui définit l'intervalle de temps prédéfini, ainsi qu'un dispositif additionneur.

7. Dispositif selon la revendication 6, **caractérisé en ce que** le dispositif de traitement des signaux (23) comporte un oscillateur dont les impulsions (4) peuvent être libérées en fonction du signal de sortie de comparateur (1) et **en ce qu'**il y a un compteur qui compte les impulsions d'oscillation (4) libérées dans l'intervalle de temps (T) prédéfini.
